# EUROPÄISCHE PATENTSCHRIFT

(11) **EP 0 839 688 B1**
(45) Veröffentlichungstag und Bekanntmachung des Hinweises auf die Patenterteilung: **11.04.2001**
(21) Anmeldenummer: 97115786.2
(22) Anmeldetag: 11.09.1997
(51) Int. Cl.: B60R 7/02

(54) **Vorrichtung zum Befestigen von Gepäckstücken im Kofferraum eines Personenkraftwagens**
Device for fastening luggage articles in the boot of a vehicle
Dispositif pour fixer des bagages dans un coffre d'un véhicule

(30) Priorität: 02.11.1996 DE 19645241
(43) Veröffentlichungstag der Anmeldung: 06.05.1998
(73) Patentinhaber: fischerwerke Artur Fischer GmbH & Co. KG, 72178 Waldachtal (DE)
(72) Erfinder: Haage, Manfred, 72280 Dornstetten (DE); Schoch, Wilhelm, 72160 Horb (DE); Schoch, Bernd, 72290 Lombach (DE); Hein, André, 71083 Herrenberg (DE); Braun, Michael, 72213 Altensteig (DE); Renner, Dietmar, 72213 Altensteig (DE); Kühn, Stefan, 75382 Althengstett (DE); Karrer, Friedrich, 72285 Pfalzgrafenweiler (DE)

(56) Entgegenhaltungen:
- EP-A- 0 535 426
- DE-A- 3 738 931
- DE-A- 19 607 600
- FR-A- 2 743 035

## Beschreibung

Die Erfindung betrifft eine Vorrichtung zum Befestigen von Gepäckstücken im Kofferraum eines Personenkraftwagens mit den Merkmalen des Oberbegriffs des Anspruchs 1.

Eine derartige Vorrichtung ist bekannt aus der DE 41 32 954 A1. Die bekannte Vorrichtung weist einen aus Winkelstücken zusammengesetzten Rahmen auf. Schenkel der Winkelstücke sind teleskopier- und arretierbar miteinander verbunden, so daß sich die Größe des Rahmens verstellen läßt. Der Rahmen läßt sich an die Abmessungen des Kofferraums anpassen, so daß er während der Fahrt nicht verrutscht, auch wenn er nur auf einen Kofferraumboden aufgelegt ist. Am Rahmen lassen sich Gepäckstücke befestigen, so daß sie im Kofferraum nicht verrutschen oder umfallen können.

Die bekannte Vorrichtung hat den Nachteil, daß sie den Kofferraum nicht gegen Verschmutzung vor versehentlich ausgestreuten Schüttgütern oder ausgelaufener Flüssigkeit schützt.

Der Erfindung liegt daher die Aufgabe zugrunde, eine Vorrichtung zum Befestigen von Gepäckstücken im Kofferraum eines Personenkraftwagens zu schaffen, die den Kofferraum, vor Verschmutzung schützt.

Diese Aufgabe wird erfindungsgemäß durch die Merkmale des Anspruchs 1 gelöst. Die erfindungsgemäße Vorrichtung weist einen größenverstellbaren Rahmen auf, in dem eine flüssigkeitsundurchlässige Bodenmatte angebracht ist. Ein Rand der Bodenmatte ist flüssigkeitsdicht am Rahmen befestigt oder am Rahmen nach oben gezogen. Die erfindungsgemäße Vorrichtung mit der im Rahmen angebrachten Bodenmatte bildet eine Art Auffangwanne mit einem Rand von der Höhe des Rahmens, wobei Gepäckstücke am Rahmen befestigbar sind.

Vorzugsweise weist die Bodenmatte einen großen Reibungskoeffizienten auf. Derartige Bodenmatten sind unter der umgangssprachlichen Bezeichnung Antirutschmatten bekannt. Dadurch werden sowohl auf die Bodenmatte gestellte Gepäckstücke als auch der Rahmen mit der Matte gegen Verrutschen gesichert. Um den Rahmen gegen Verrutschen im Kofferraum zu sichern kann eine Unterseite der Bodenmatte auch mit Klettband oder kleinen, nach unten abstehenden Noppen versehen sein, die sich in einen Bodenteppich des Kofferraums krallen. Auch kann der Rahmen mit kurzen, nach unten abstehenden Stiften versehen sein, die sich im Bodenteppich des Kofferraums festkrallen und dadurch den Rahmen mit der Bodenmatte gegen Verrutschen sichern.

Bei einer Ausgestaltung der Erfindung weist der Rahmen Profilleisten auf, die mit den Winkelstücken miteinander verbunden sind. Die Profilleisten sind an Schenkeln der Winkelstücke teleskopier- und arretierbar angebracht. Die Profilleisten und Winkelstücke bilden einen vorzugsweise rechteckigen Rahmen, dessen Größe einstellbar ist.

Die Profilleisten sind zum Anbringen von Befestigungselementen ausgebildet, so daß Gepäckstücke mit Gummispannern, einem Gepäcknetz, Gurten oder dgl. am Rahmen befestigt werden können, um sie im Kofferraum zu sichern.

Bei einer Ausgestaltung der Erfindung weisen die Profilleisten des Rahmens eine in ihrer Längsrichtung verlaufende Hinterschneidung auf, die von am Rahmen angebrachten Befestigungselementen hintergriffen wird. Die Hinterschneidung kann durchgehend oder unterbrochen ausgebildet, und oben, an der Außen- oder Innenseite des Rahmens angeordnet sein. Diese sich in Längsrichtung der den Rahmen bildenden Profilleisten erstreckende Anbringeinrichtung ermöglicht die Befestigung von Gegenständen an beliebigen Stellen des Rahmens.

Bei einer Ausgestaltung weist die erfindungsgemäße Vorrichtung Befestigungselemente wie Haken oder Ösen auf. Diese sind mit einem Fuß versehen, mit denen sie sich in eine komplementäre Einrichtung zum Anbringen eines Befestigungselements einsetzen und durch Drehung um ca. 90° um ihre Hochachse verriegeln lassen.

Um höhere Gepäckstücke sicher mittels der erfindungsgemäßen Vorrichtung in einem Kofferraum befestigen zu können, weist diese bei einer Ausgestaltung der Erfindung im wesentlichen senkrecht vom Rahmen abstehende Gepäckstützen auf. An den Gepäckstützen sind höhere Gepäckstücke beispielsweise mittels eines Spannbandes in Höhe oder oberhalb ihres Schwerpunktes befestigbar. Die Gepäckstützen sind vorzugsweise lösbar oder in die Rahmenebene umlegbar am Rahmen angebracht, damit sie nicht störend im Wege stehen, wenn sie nicht benötigt werden. Außerdem läßt sich der flache Rahmen ohne abstehende Gepäckstützen besser in den Kofferraum einlegen oder entnehmen und platzsparend aufbewahren, wenn er nicht im Kofferraum liegt.

Die Erfindung wird nachfolgend anhand eines in der Zeichnung dargestellten Ausführungsbeispiels näher erläutert. Es zeigen:
- Figur 1: eine perspektivische Darstellung einer in einen Kofferraum eingelegten, erfindungsgemäßen Vorrichtung;
- Figur 2: ein Winkelstück der erfindungsgemäßen Vorrichtung in perspektivischer Darstellung;
- Figur 3: ein an der Vorrichtung aus Figur 1 angebrachtes Befestigungselement in Seitenansicht gemäß der Erfindung;
- Figur 4: eine an der Vorrichtung aus Figur 1 angebrachte Gepäckstütze gemäß der Erfindung in perspektivischer Darstellung;
- Figur 5: die Gepäckstütze aus Figur 4 schräg von unten; und
- Figur 6: ein weiteres Befestigungselement gemäß der Erfindung in perspektivischer Darstellung.

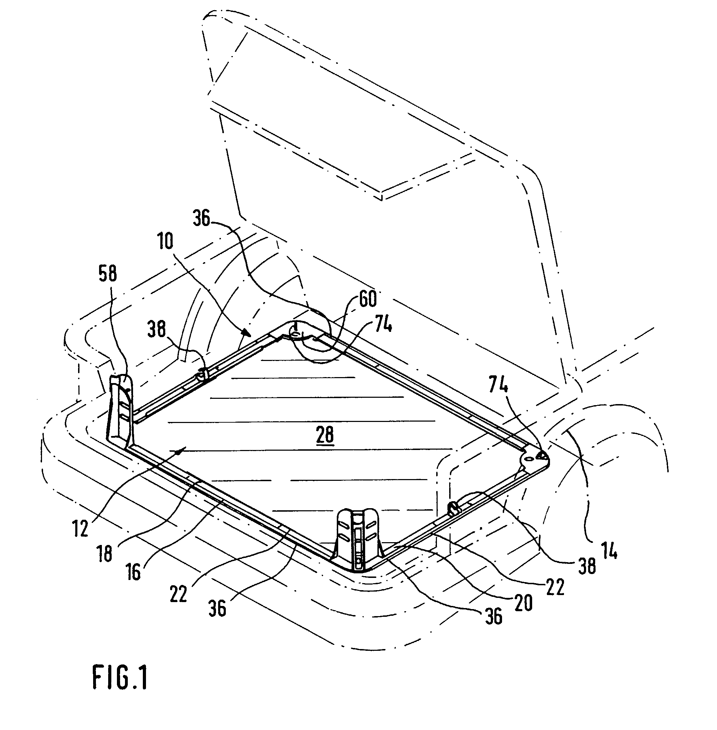

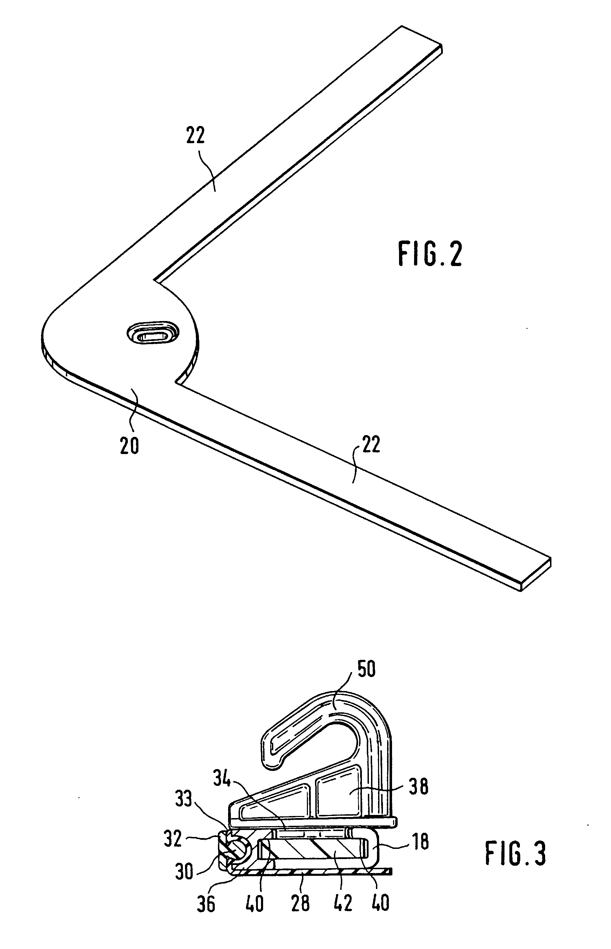

Die in Figur 1 dargestellte, insgesamt mit 10 bezeichnete, erfindungsgemäße Vorrichtung zum Befestigen von Gepäckstücken im Kofferraum 12 eines Personenkraftwagens 14 weist einen rechteckigen Rahmen 16 auf, der aus vier Profilleisten 18 zusammengesetzt ist, die über vier Winkelstücke 20 miteinander verbunden sind. Die Winkelstücke 20 sind im dargestellten Ausführungsbeispiel flache Stahlwinkel (Figur 2). Die Profilleisten 18 bestehen vorzugsweise aus Aluminium.Sie weisen einen flachen, C-förmigen Querschnitt auf, wobei Schenkelenden des C-Profils nach innen auf einander zu umgebogen sind (Figur 3). Die Schenkelenden bilden Hinterschneidungen 40 beiderseits eines in Längsrichtung der Profilleisten 18 durchgehenden Schlitzes 34, durch welchen ein Innenraum des C-förmigen Querschnitts zugänglich ist.

Die Profilleisten 18 sind mit ihrem C-förmigen Querschnitt teleskopierbar auf Schenkel 22 der Winkelstücke 20 aufgeschoben, so daß sich die Größe des ein Rechteck bildenden Rahmens 16 der erfindungsgemäßen Vorrichtung 10 verstellen und an die Abmessungen des Kofferraums 12 anpassen läßt. Außen an einer Schmalseite weisen die Profilleisten 18 eine Profilnut 30 runden Querschnits auf, deren Öffnungsbreite schmaler als ihre größte Breite ist, die sich also zu ihrer Öffnung hin verjüngt (Figur 3).

Im Anschluß an die Profilleitsen 18 sind von außen Zwischstücke 36 auf die Schenkel 22 der Winkelstücke 20 aufgesetzt, die die Profilnut 30 fluchtend verlängern. Im Scheitelbereich der Winkelstücke 20 sind Winkelkappen 60 auf die Winkelstücke 20 aufgesetzt, die die Profilnut 30 außen um die Winkelstücke 20 herum bis zum nächsten Zwischenstück 36 fortführen. Die Profilnut 30 verläuft ununterbrochen um den Rahmen 16 herum. Die Zwischenstücke 36 sind von der Größe des Kofferraums 12 abhängig abgelängt, sie dienen als Abstandshalter der auf die Schenke 22 der Winkelstücke 20 aufgeschobenen Profilleisten 18 von den auf die Winkelstücke 20 aufgesetzten Winkelkappen 60. Über die Länge der Zwischenstücke 36 wird die Größe des Rahmens 16 eingestellt.

In den Rahmen 16 ist eine flüssigkeitsundurchlässige Bodenmatte 28 eingespannt. Zum Einspannen ist eine elastische Spannleiste 32 in die um den Rahmen 16 umlaufende Profilnut 30 eingeschnappt. Zum Einschnappen weist die Spannleiste 32 einen zur Profilnut 30 komplementären Wulst 33 kreisförmigen Querschnitts auf, um den herum die Bodenmatte 28 in die Profilnut 30 eingelegt und dadurch flüssigkeitdicht in den Rahmen 16 der erfindungsgemäßen Vorrichtung 10 eingespannt ist. Die Vorrichtung 10 bildet eine flüssigkeitsdichte Bodenwanne.

Der Schlitz 34 der C-förmigen Profilleisten 18 mit den angrenzenden Hinterschneidungen 40 bildet eine Einrichtung zum Anbringen von beispielsweise Haken 50 oder Ösen aufweisenden Befestigungselementen 38, die zum Befestigen von nicht dargestellten Gepäckstücken im Kofferraum 12 vorgesehen sind. Das Befestigungselement 38 weist einen abgesetzten Fuß 42 auf, welcher den Schlitz 34 durchgreifend in die Profilleiste 18 einsetzbar ist und die Hinterschneidungen 40 hintergreift. Das Befestigungselement 38 kann formschlüssig an jeder beliebigen Stelle der Profilleiste 18 angebracht werden.

Der Fuß 42 des Befestigungselements 38 ist rechteckig. Er ist weniger breit als der Schlitz 34. Durch Drehung des Befestigungselements 38 um 90° kommt dessen Fuß 42 von den Hinterschneidungen 40 frei und das Befestigungselement 38 läßt sich vom Rahmen 16 entfernen. Das Einsetzen des Befestigungselements 38 an jeder gewünschten Stelle der Profilleiste 18 erfolgt in umgekehrter Reihenfolge. Um das Drehen des Befestigungselements 38 zu erleichtern, weist der Fuß 42 Rundungen 44 anstelle zweier diagonal gegenüberliegender Ecken auf.

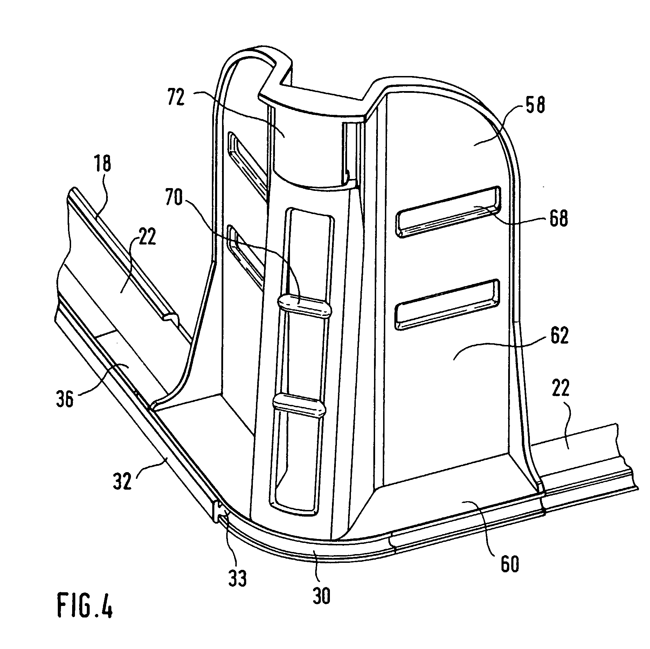

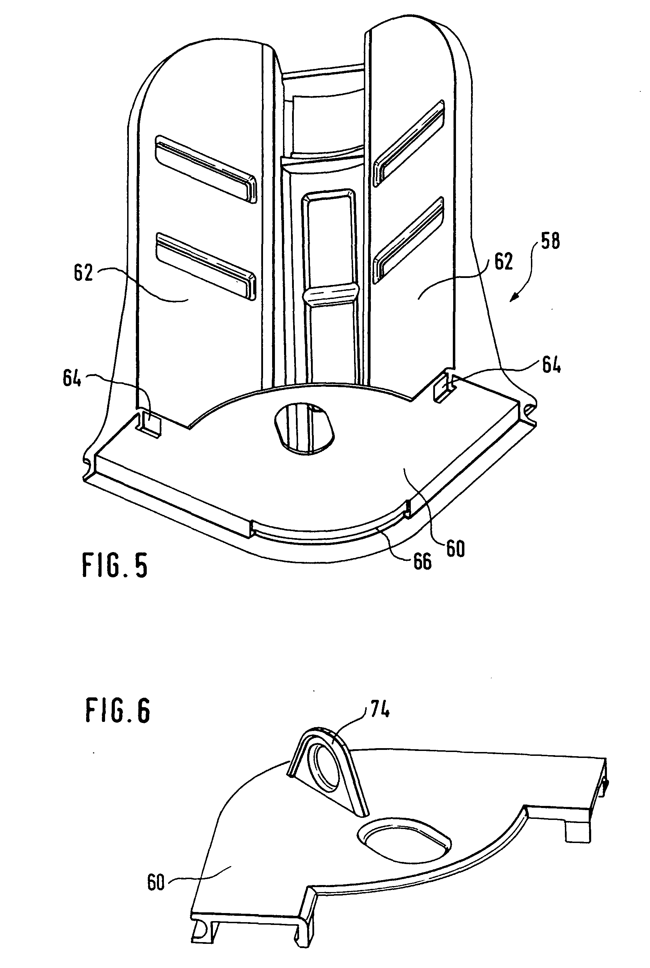

Figuren 4 und 5 zeigen eine Gepäckstütze 58 der erfindungsgemäßen Vorrichtung 10, die mit der Winkelkappe 60 einstückig ist. Die Winkelkappe 60 bildet einen Fuß, mit dem die Gepäckstütze 58 nach oben abstehend an einem der Winkelstücke 20 des Rahmens 16 anbringbar ist. Die Gepäckstütze 58 weist zwei Stützwände 62 auf, die rechtwinklig zueinander angeordnet sind und sich senkrecht von der Winkelkappe 60 nach oben erstrecken. Von einer Unterseite der den Fuß der Gepäckstütze 58 bildenden Winkelkappe 60 stehen zwei Rasthaken 64 nach unten ab, mit denen die Gepäckstütze 58 die Schenkel 22 des Winkelstücks 20 an derern Innenrand hintergreift. An einem Außenrand weist die Winkelkappe 60 eine Hinterschnittleiste 66 auf, die das Winkelstück 20 in dessen Scheitelbereich an einem Außenradnd hintergreift.

Zum Anbringen wird die Gepäckstütze 58 mit ihrer Hinterschnittleiste 66 das Winkelstück 20 hintergreifend von außen in dessen Scheitelbereich angesetzt und anschließend an das Winkelstück 20 angedrückt, so daß die Rasthaken 64 am Innenrand des Winkelstücks 20 einrasten. Die beiden Rasthaken 64 und die Hinterschnittleiste 66 sind an den Ecken eines gedachten Dreiecks angeordnet, so daß sich eine Dreipunktbefestigung zwischen Gepäckstütze 58 und Winkelstück 20 ergibt. Diese gibt der Gepäckstütze 58 insbesondere auch bei einer Querbelastung stabilen Halt am Winkelstück 20 und damit am Rahmen 16 der erfindungsgemäßen Vorrichtung 10.

Die Gepäckstütze 58 weist Durchbrücke 68, Bolzen 70 und eine Gurtlasche 72 zum Befestigen nicht dargestellter Gepäckstücke mit Gummispannern oder Spanngruten auf. Anstelle der Gepäckstütze 58 kann die Winkelkappe 60 beispielsweise auch eine mit ihr einstückeige Öse 74 aufweisen, wie es in Figur 6 dargestellt ist.

## Patentansprüche

1. Vorrichtung zum Befestigen von Gepäckstücken im Kofferraum eines Personenkraftwagens, mit einem auf einem Kofferraumboden auflegbaren, größenverstellbaren Rahmen, **dadurch gekennzeichnet,** daß eine flüssigkeitsundurchlässige Bodenmatte (28) flüssigkeitsdicht oder mit ihren Rändern nach oben gezogen am Rahmen (16) angebracht ist.

2. Vorrichtung nach Anspruch 1, **dadurch gekennzeichnet,** daß die Bodenmatte (28) einen großen Reibungskoeffizienten aufweist.

3. Vorrichtung nach Anspruch 1, **dadurch gekennzeichnet,** daß der Rahmen (16) Profilleisten (18) aufweist, die über Winkelstücke (20) miteinander verbunden sind, wobei die Profilleisten (18) an Schenkeln (22) der Winkelstücke (20) teleskopierbar und arretierbar angebracht sind.

4. Vorrichtung nach Anspruch 3, **dadurch gekennzeichnet,** daß der Rahmen (16) eine Einrichtung (34) zum Anbringen von Befestigungselementen (38) aufweist.

5. Vorrichtung nach Anspruch 4, **dadurch gekennzeichnet,** daß die Einrichtung (34) zum Anbringen von Befestigungselementen (38) eine in Längsrichtung verlaufende Hinterschneidung (40) aufweist.

6. Vorrichtung nach Anspruch 4, **dadurch gekennzeichnet,** daß ein Befestigungselement (38) in die Einrichtung (34) zum Anbringen eines Befestigungselements (38) einsetzbar und durch Drehung um ca. 90° verriegelbar ist.

7. Vorrichtung nach Anspruch 1, **dadurch gekennzeichnet,** daß der Rahmen (16) im wesentlichen senkrecht von ihm abstehende Gepäckstützen (58) aufweist.

8. Vorrichtung nach Anspruch 7, **dadurch gekennzeichnet,** daß die Gepäckstützen (58) lösbar am Rahmen (16) angebracht sind.

## Claims

1. Device for securing pieces of luggage in the luggage compartment of a car, having a frame of adjustable size, which frame is arranged to be placed on a luggage compartment floor, **characterized in that** a floor mat (28), which is impermeable to liquid, is mounted on the frame (16) in a liquid-tight manner or with its edges turned up.

2. Device according to claim 1, **characterized in that** the floor mat (28) has a high coefficient of friction.

3. Device according to claim 1, **characterized in that** the frame (16) has profiled strips (18), which are connected to each other *via* corner pieces (20), the profiled strips (18) being attached to limbs (22) of the corner pieces (20) in a manner allowing them to be telescoped and fixed in position.

4. Device according to claim 3, **characterized in that** the frame (16) has a device (34) for attaching securing elements (38).

5. Device according to claim 4, **characterized in that** the device (34) for attaching securing elements (38) has an overhang (40) running in the longitudinal direction.

6. Device according to claim 4, **characterized in that** a securing element (38) is arranged to be inserted into the device (34) for attaching a securing element (38) and locked in position as a result of rotation through approximately 90°.

7. Device according to claim 1, **characterized in that** the frame (16) has luggage supports (58) projecting from it in a substantially perpendicular direction.

8. Device according to claim 7, **characterized in that** the luggage supports (58) are attached to the frame (16) detachably.

## Revendications

1. Dispositif destiné à fixer des bagages dans le coffre d'un véhicule de tourisme, avec un châssis de taille réglable et pouvant être posé sur le fond d'un coffre, caractérisé en ce qu'un tapis de sol (28) est imperméable aux liquides ou est positionné sur le châssis (16), ses bords étant tirés vers le haut.

2. Dispositif selon la revendication 1, caractérisé en ce que le tapis de sol (28) présente un coefficient de frottement élevé.

3. Dispositif selon la revendication 1, caractérisé en ce que le châssis (16) présente des éléments profilés (18) qui sont reliés entre eux par l'intermédiaire de coudes (20), moyennant quoi les éléments profilés (18) sont positionnés sur des branches (22) du coude (20) de manière télescopique et bloquante.

4. Dispositif selon la revendication 3, caractérisé en ce que le châssis (16) présente un dispositif (34) destiné à positionner des éléments de fixation (38).

5. Dispositif selon la revendication 4, caractérisé en ce que le dispositif (34) destiné à positionner des éléments de fixation (38) présente une contre-dépouille (40) s'étendant dans le sens longitudinal.

6. Dispositif selon la revendication 4, caractérisé en ce qu'un élément de fixation (38) peut être fixé dans le dispositif (34) destiné à positionner un élément de fixation (38) et peut être verrouillé en effectuant une rotation d'environ 90°.

7. Dispositif selon la revendication 1, caractérisé en ce que le châssis (16) présente des montants pour bagages (58) sensiblement perpendiculaires par rapport à ce dernier.

8. Dispositif selon la revendication 7, caractérisé en ce que les montants pour bagages (58) sont positionnés sur le châssis (16) de manière détachable.
